# EUROPÄISCHE PATENTSCHRIFT

(11) **EP 3 212 120 B1**
(45) Veröffentlichungstag und Bekanntmachung des Hinweises auf die Patenterteilung: **02.09.2020**
(21) Anmeldenummer: 15794844.9
(22) Anmeldetag: 29.10.2015
(51) Int. Cl.: A61C 13/00

(54) **VERFAHREN ZUR ERSTELLUNG EINES MODELLS EINES ZAHNERSATZTEILS**
METHOD FOR GENERATING A MODEL OF A DENTAL REPLACEMENT PART
PROCÉDÉ DE CRÉATION D'UN MODÈLE D'ÉLÉMENT PROTHÉTIQUE DENTAIRE

(30) Priorität: 29.10.2014 DE 102014222037
(43) Veröffentlichungstag der Anmeldung: 06.09.2017
(73) Patentinhaber: Sirona Dental Systems GmbH, 64625 Bensheim (DE)
(72) Erfinder: OSKAM, Thomas, CH-8200 Schaffhausen (CH)
(74) Vertreter: Özer, Alpdeniz
(86) Internationale Anmeldenummer: PCT/EP2015/075090
(87) Internationale Veröffentlichungsnummer: WO 2016/066736

(56) Entgegenhaltungen:
- WO-A2-2013/124260
- US-A1- 2008 124 679
- US-A1- 2009 246 726
- US-A1- 2011 038 514

## Beschreibung

### Technisches Gebiet

Die Erfindung betrifft ein Verfahren zur Erstellung eines digitalen Modells eins Zahnersatzteils, das aus einer Zahnprothese und einer Prothesenbasis besteht, wobei die Prothesenbasis mindestens eine Rückenschutzplatte umfasst. Ferner betrifft die Erfindung ein Verfahren zur Herstellung eines solchen Zahnersatzteils.

### Stand der Technik

Zahnersatzteile werden heutzutage meist unter Zuhilfenahme digitaler Mittel entworfen und hergestellt.

In der WO 2012/041329 A1 und der WO 2012/083959 A1 werden beispielsweise Verfahren beschrieben, die zur Herstellung eines aus einer Zahnprothese und einer Prothesenbasis bestehenden Zahnersatzteils ein digitales Modell erzeugen. Hierfür wird insbesondere eine dreidimensionale digitale Darstellung des zu versorgenden Kiefers verwendet.

In der US 8,359,114 B2 wird eine dentale Restauration mittels einer haptischen Schnittstelle entworfen.

Manche Zahnersatzteile, wie beispielsweise Modellgussprothesen, benötigen zusätzliche, verstärkende Strukturen, wie Halte- oder Stützelemente. Es ist beispielsweise üblich, beim Ersetzen von einem oder mehreren Frontzähnen durch eine Modellgussprothese, diese durch eine Rückenschutzplatte zu verstärken. Problematisch ist es, die Rückenschutzplatte so in das Zahnersatzteil zu integrieren, dass einerseits eine ausreichende Stabilität sichergestellt werden kann und andererseits dafür gesorgt ist, dass sich die künstlichen Zähne im Mund des Patienten natürlich anfühlen und wie gewünscht positioniert sind. WO2013/124260 beschreibt eine Zahnimplantatanordnung und verwandte Methoden.

Aufgabe der vorliegenden Erfindung ist es nun, ein Verfahren zur Erstellung eines digitalen Modells eines eine solche Rückenschutzplatte umfassenden Zahnersatzteils sowie ein Verfahren zu dessen Herstellung bereitzustellen, welches eine hohe Stabilität sowie eine große Präzision hinsichtlich Position und Passgenauigkeit sicherstellt.

### Darstellung der Erfindung

Die Erfindung ist wie in den Ansprüchen definiert. Gegenstand der Erfindung ist ein Verfahren zur Erstellung eines digitalen Modells eines Zahnersatzteils, das aus einer Zahnprothese und einer eine Rückenschutzplatte umfassenden Prothesenbasis besteht. Das Verfahren sieht vor, dass in einem digitalen Modell eines zu versorgenden Kiefers oder Kieferabschnitts und eines darin positionierten digitalen Zahnprothesenmodells im Bereich des Zahnprothesenmodells eine Grenzfläche automatisch und/oder manuell eingezeichnet wird. Aus der Grenzfläche, einer angrenzenden Oberfläche des digitalen Modells und einem die angrenzende Oberfläche des Kiefermodells und die Grenzfläche verbindenden Bereich einer Oberfläche des Zahnprothesenmodells wird ein Rückenschutzplattenmodell gebildet. Weiterhin wird aus dem digitalen Zahnprothesenmodell durch Übernahme der Grenzfläche als Oberfläche ein überarbeitetes Zahnprothesenmodell gebildet. Das digitale Modell des Zahnersatzteils wird dann aus dem Rückenschutzplattenmodell und dem überarbeiteten Zahnprothesenmodell erzeugt.
Die Erfindung betrifft ein beliebiges Zahnersatzteil, welches aus einer Zahnprothese, die auch als künstlicher Zahn bezeichnet werden kann, und einer als Prothesenbasis bezeichneten Haltevorrichtung aufgebaut ist, wobei die Prothesenbasis eine Rückenschutzplatte aufweist.

Eine Rückenschutzplatte ist eine die Zahnprothese verstärkende Struktur, die hierfür zumindest teilweise in die Zahnprothese hineinragt. Eine solche Rückenschutzplatte ist beispielsweise notwendig bzw. wird beispielsweise eingesetzt, wenn ein oder mehrere Frontzähne durch eine Prothese ersetzt werden.

Um einen hohen Tragekomfort zu erreichen, muss eine Rückenschutzplatte möglichst die Oberfläche der Zahnprothese nachbilden. Ferner muss gewährleistet werden, dass sich die an der Rückenschutzplatte angebrachte Zahnprothese nach dem Einsetzen des gesamten Zahnersatzteils in einen zu versorgenden Kiefer präzise an der gewünschten Position befindet. Um eine gewünschte Stabilität gewährleisten zu können muss die Rückenschutzplatte weiterhin eine ausreichende Dicke aufweisen, also ausreichend weit in die Zahnprothese hineinragen. Die Stabilität kann ferner durch ein Verstärken der Rückenschutzplatte in Richtung angrenzender Elemente, beispielsweise in Richtung des Kiefers, verbessert werden.

Ausgangsbasis des Verfahrens ist ein digitales Modell des zu versorgenden Kiefers oder Kieferabschnitts mit einem darin positionierten digitalen Zahnprothesenmodell. Das digitale Modell des Kiefers, auch als Kiefermodell bezeichnet, kann beispielsweise mittels einer dreidimensionalen Vermessung des zu versorgenden Kiefers, also einer intraoralen Vermessung, oder durch eine Vermessung eines physischen Modells des Kiefer, z.B. eines Gipskiefermodells, erzeugt werden.

Das digitale Zahnprothesenmodell kann beispielsweise durch das dreidimensionale Vermessen eines auf ein physisches Kiefermodell aufgebrachten physischen Zahnprothesenmodells erzeugt werden. Beispielsweise kann ein Zahnprothesenmodell mit Wachs auf dem Gipskiefermodell aufgestellt (Wax-Up) und gescannt werden. Die beiden Datensätze des Gipskiefermodells ohne und mit aufgestellter Zahnprothese können dann anhand der übereinstimmenden Bereiche korreliert werden und so das erfindungsgemäße digitale Modell des Kiefers mit positioniertem, digitalem Zahnprothesenmodell erzeugt werden.

Es ist auch möglich ein virtuelles Zahnprothesenmodell digital zu erzeugen und in einem digitalen Modell des zu versorgenden Kiefers zu positionieren, um zu dem erfindungsgemäßen digitalen Modell mit positionierter Zahnprothese zu gelangen.

Das Einzeichnen der Grenzfläche, die als Grenzfläche zwischen Rückenschutzplatte und Zahnprothese dienen soll, kann vollständig durch einen Benutzer, vollständig automatisiert oder durch eine Kombination von Benutzereingaben und automatisierten Schritten geschehen.

Das Verfahren stellt sicher, dass die Rückenschutzplatte eine orale Fläche aufweist, welche exakt der gewünschten oralen Oberfläche der Zahnprothese entspricht und dass die Zahnprothese nach dem Anbringen an der Rückenschutzplatte und dem Einbringen in den Kiefer genau an der gewünschten Position zu stehen kommt. Insbesondere durch automatisierte Schritte bei der Erzeugung der Grenzfläche könne ferner Unterschnitte oder das Hineinragen der Rückenschutzplatte in den Kiefer zuverlässig verhindert werden. Auch Sollbruchstellen können vermieden werden bzw. es kann eine hinsichtlich der Stabilität optimale Form der Rückenschutzplatte erreicht werden.

Vorteilhafterweise wird die Grenzfläche durch eine Verschiebung einer auf einer oralen Oberfläche des Zahnprothesenmodells und/oder des digitalen Modells des Kiefers automatisch und/oder manuell markierten Ausgangsfläche um eine vorgegebene Tiefe in eine im Wesentlichen vestibuläre Richtung erzeugt.

Hierdurch kann sichergestellt werden, dass die zu erzeugende Rückenschutzplatte bzw. das digitale Rückenschutzplattenmodell über ihre gesamte Höhe eine ausreichende Dicke aufweist, um die gewünschte Stabilität sicherzustellen. Eine typische Dicke bzw. Stärke ist beispielsweise ca. 0,6 mm. Weiterhin kann hierdurch eine möglichst einfache Geometrie der Rückenschutzplatte bzw. der Grenzfläche sichergestellt werden.

Vorteilhafterweise wird die Ausgangsfläche durch einzeichnen einer Umfangslinie markiert, was sowohl hinsichtlich der Umsetzung, als auch der Anwendung eine besonders einfache Variante zur Erzeugung der Ausgangsfläche darstellt.

Vorteilhafterweise erfolgt die Verschiebung der Ausgangsfläche entlang einer eine Einschubrichtung für das Zahnersatzteils berücksichtigenden Richtung. Hierdurch können Unterschnitte bzw. Hinterschneidungen auf zuverlässige Weise vermieden werden.

Vorteilhafterweise wird die Grenzfläche nach dem Einzeichnen manuell und/oder automatisch verändert. Hierdurch kann ein Benutzer auf individuelle Gegebenheiten besser eingehen bzw. es können weitere standardisierte Eigenschaften von Rückenschutzplatten umgesetzt werden, z.B. eine Verstärkung in Richtung des angrenzenden Kiefers oder das Vorsehen von Halteelementen zwischen Rückenschutzplatte und Zahnprothese.

Vorteilhafterweise wird die Grenzfläche in einem an die Oberfläche des digitalen Modells des Kiefers angrenzenden Bereich automatisch und/oder manuell verstärkt. Hierdurch kann die Stabilität deutlich erhöht werden.

Vorteilhafterweise wird ein die Grenzfläche überlappendes Halteelement automatisch oder manuell eingezeichnet. Hierdurch können auf einfache Weise übliche Halteelemente zwischen Rückenschutzplatte und Zahnprothese, wie beispielsweise Retentionsplatten, vorgesehen bzw. in das Modell des Zahnersatzteils integriert werden.

Vorteilhafterweise wird eine Form des überlappenden Elements in das Rückschutzplattenmodell und/oder das überarbeitete Zahnprothesenmodell integriert. Die Form des Rückenschutzplattenmodells bzw. des überarbeiteten Zahnprothesenmodells kann auf einfache Weise an überlappende Elemente, wie Retentionsplatte oder ähnliches, angepasst werden, indem Ausnehmungen oder Auskragungen der Form des überlappenden Elements entsprechend übernommen bzw. vorgesehen werden.

Vorteilhafterweise werden eine oder mehrere Ecken der Grenzfläche automatisch abgerundet, wodurch die Stabilität wesentlich erhöht werden kann. Insbesondere Übergänge zwischen verschiedenen Materialien, z.B. zwischen Rückenschutzplatte und Zahnprothese, werden vorteilhafterweise abgerundet, z.B. als Hohlkehle, ausgestaltet, um Sollbruchstellen zu vermeiden.

Vorteilhafterweise wird eine Ausnehmung und/oder Auskragung als Verbindungselement manuell und/oder automatisch in die Grenzfläche integriert. Ein als Ausnehmung bzw. Auskragung ausgebildetes Verbindungselement kann die Stabilität des Zahnersatzteils erhöhen. Das Verbindungselement kann beispielsweise durch ein Markieren und Verschieben eines Bereichs der Grenzfläche mittels eines geeigneten Eingabemittels, z.B. einer Maus, oder auch gemäß geeigneter Vorgaben hinsichtlich der Höhe, Position und/oder Ausrichtung des Verbindungselements automatisch in die Grenzfläche integriert werden. Das Verbindungselement kann beispielsweise als eine Ausnehmung der Rückenschutzplatte in oraler Richtung und entsprechende Auskragung der Zahnprothese in orale Richtung ausgebildet werden. Die Ausnehmung bzw. Auskragung kann auch nach Art einer Uhrglasfassung hinsichtlich der Grenzfläche schräg ansteigend ausgebildet sein.

Die Erfindung betrifft weiterhin ein Verfahren zur Herstellung eines Zahnersatzteils, das aus einer Zahnprothese und einer eine Rückenschutzplatte umfassenden Prothesenbasis besteht, wobei das Zahnersatzteil anhand eines wie vorbeschrieben erzeugten digitalen Modells des Zahnersatzteils hergestellt wird.

Auf Basis des erfindungsgemäßen Zahnersatzmodells kann ein qualitativ hochwertiger, den vorab ausgeführten Ansprüchen entsprechender Zahnersatz zuverlässig hergestellt werden. Die Prothesenbasis kann anhand des auf Basis des Rückenschutzplattenmodells erzeugten digitalen Modells erzeugt werden. Die Zahnprothese kann anhand des überarbeiteten Zahnprothesenmodells hergestellt werden. Ist bereits eine Zahnprothese vorhanden, die beispielsweise als Basis für das digitale Zahnprothesenmodell gedient hat, so kann diese an das überarbeitete Zahnprothesenmodell angepasst werden.

Vorteilhafterweise wird anhand des überarbeiteten Zahnprothesenmodells eine Schablone hergestellt, die eine Vertiefung aufweist, deren Form einer Negativform der bis zur Grenzfläche reichenden Oberfläche des überarbeiteten Zahnprothesenmodells entspricht.

Die Schablone stellt eine einfache Möglichkeit dar, eine vorhandene Zahnprothese passend einzuschleifen. Insbesondere, wenn diese Zahnprothese als Basis für das digitale Zahnprothesenmodell gedient hat, kann durch die erfindungsgemäße Schablone ein passgenaues Einschleifen sichergestellt werden.

Vorteilhafterweise ist die Schablone mehrteilig ausgebildet. Hierdurch kann das Anbringen der Schablone an der bzw. um die einzuschleifende Zahnprothese erleichtert oder überhaupt erst ermöglicht werden. Verschiedene Schablonenteile können beispielsweise mit einem eindeutigen Schlüsselmechanismus von formschlüssig ineinandergreifenden Elementen miteinander verbunden werden, so dass das Zusammensetzen eindeutig ist. Der oder die Prothesenzähne werden von der Schablone so eingeschlossen, dass der Randbereich, welcher an die Rückenschutzplatte angelegt werden soll, genau durch den Schablonenrand geführt wird. So kann der Benutzer den Prothesenzahn am Randbereich passgenau einschleifen, um den Prothesenzahn anschließend an der Rückenschutzplatte befestigen zu können.

### Kurzbeschreibung der Zeichnungen

Ausführungsbeispiele der Erfindung sind in den Zeichnungen dargestellt. Es zeigen die
- Fig. 1: ein digitales Modell eines zu versorgenden Kiefers mit einem darin positionierten digitalen Zahnprothesenmodell, die
- Fig. 2: ein Querschnittprofil des Modells nach Fig. 1 im Bereich des positionierten digitalen Zahnprothesenmodells, die
- Fig. 3: ein Markieren einer Ausgangsfläche in einem Modell gemäß Fig. 1, die
- Fig. 4: das Querschnittprofil aus Fig. 2 mit einer veränderten Grenzfläche und einem überlappenden Element, die
- Fig. 5: ein erfindungsgemäß erzeugtes Modell eines Zahnersatzteils und die
- Fig. 6: eine erfindungsgemäße Schablone.

### Ausführungsbeispiele

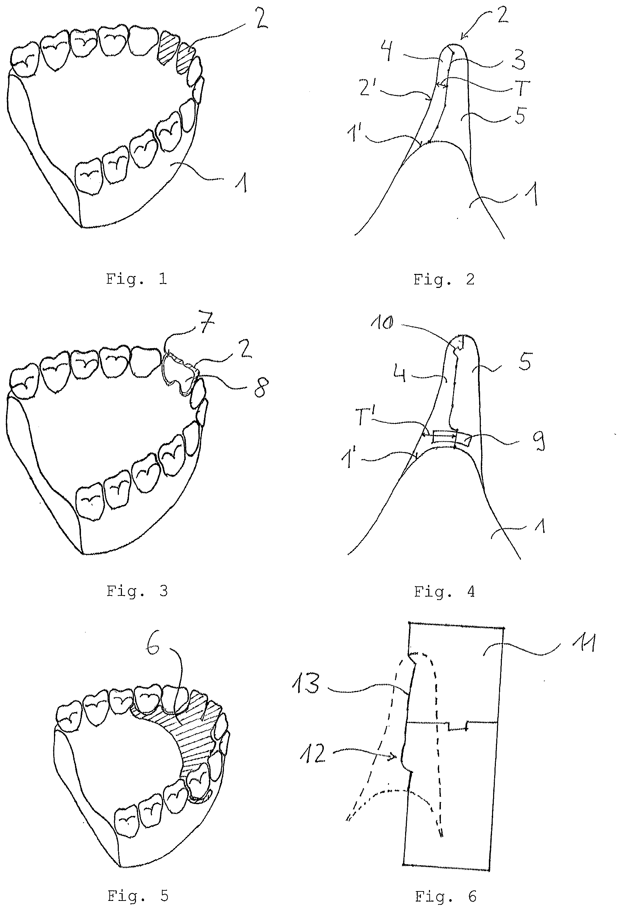

Die Fig. 1 zeigt ein digitales Modell 1 eines zu versorgenden Kiefers, welches beispielsweise mittels eines Scans mit einer intraoralen Kamera erzeugt werden kann. Im digitalen Modell 1 ist ein digitales Prothesenzahnmodell 2, welches zur besseren Erkennbarkeit schraffiert dargestellt ist, an Fehlstellen des zu versorgenden Kiefers positioniert.

Fig. 2 zeigt ein Querschnittprofil des in Fig. 1 dargestellten digitalen Modells 1 im Bereich des Zahnprothesenmodells 2. Gemäß dem erfindungsgemäßen Verfahren wird in das Zahnprothesenmodell 2 eine Grenzfläche 3 eingezeichnet, die im Querschnittprofil der Fig. 2 als Profil zu erkennen ist. Die Grenzfläche 3 erstreckt sich von einer Oberfläche 2' des Zahnprothesenmodells 2 bis zu einer Oberfläche 1' des digitalen Modells 1 des Kiefers. Diese Grenzfläche 3 dient als Grenzfläche zwischen einem zu erzeugenden Rückenschutzplattenmodell 4 und einem überarbeiteten Zahnprothesenmodell 5, welche als Basis für ein zu erzeugendes Zahnersatzteilmodell 6 (in Fig. 5 dargestellt) dienen.

Das Rückenschutzplattenmodell 4 wird aus der Grenzfläche 3, einem angrenzenden Abschnitt der Oberfläche 1' des digitalen Modells 1 des Kiefers und einem Abschnitt der Oberfläche 2' des Zahnprothesenmodells 2, welcher sich oral zwischen der Oberfläche 1' des digitalen Kiefermodells 1 und der Grenzfläche 3 erstreckt, gebildet.

Das überarbeitete Zahnprothesenmodell 5 wird aus dem digitalen Zahnprothesenmodell 2 und der Grenzfläche 3 gebildet, so dass durch die Grenzfläche 3 der vom Rückenschutzplattenmodell 4 eingenommene Abschnitt des Zahnprothesenmodells quasi abgeschnitten bzw. entfernt wird.

Die Grenzfläche 3 kann manuell, beispielsweise mittels eines Eingabemittels wie einer Maus, markiert werden. Dies kann beispielsweise durch Markieren der gesamten Fläche oder auch durch Markieren einer die Fläche begrenzenden Linie vorgenommen werden. Auch eine automatische Markierung der Grenzfläche 3 ist möglich. Hierfür kann beispielsweise auf einer oralen Oberfläche 7 des Zahnprothesenmodells 2 eine Ausgangfläche 8 automatisch geschätzt oder manuell eingezeichnet werden (Fig. 3). Die Grenzfläche 3 wird dann durch eine im Wesentlichen parallele Verschiebung der Ausgangsfläche 8 in vestibuläre Richtung in das Zahnprothesenmodell 2 hinein erzeugt.

Als Strecke der Verschiebung wird eine Tiefe T vorgegeben (Fig. 2). Diese entspricht beispielsweise einer typischen Stärke einer Rückenschutzplatte, z.B. 0,6 mm. Für die automatische Verschiebung wird die Ausgangsfläche 8 beispielsweise Parametrisiert, wobei vorteilhafterweise hinsichtlich der Parametrisierung wie auch hinsichtlich der Richtung der Verschiebung eine vorab festgelegte Einschubachse des herzustellenden Zahnersatzteils berücksichtigt wird.

Die so erzeugte Grenzfläche 3 kann anschließend noch manuell und/oder automatisch verändert bzw. optimiert werden. Zur Erhöhung der Stabilität wird z.B. üblicherweise ein überlappendes Halteelement zwischen Zahnprothese und Rückenschutzplatte vorgesehen. Dieses kann in das Profil des digitalen Modells 1 beispielsweise, wie in Fig. 4 dargestellt, zuerst als überlappendes, also über die Grenzfläche 3 auf beiden Seiten hinausragendes Element 9 eingezeichnet und positioniert werden. Anschließend wird die Form des überlappenden Elements 9 in das zu erstellende digitale Modell 6 des Zahnersatzteils so übernommen, dass die Form des überlappenden Elements 9 vollständig in die Form eines der beiden aneinander angrenzenden Bauteile bzw. Modelle 4, 5 für Rückenschutzplatte bzw. Zahnprothese übernommen wird und das andere Bauteil bzw. Modell 4, 5 eine entsprechende Ausnehmung aufweist.

Eine weitere Variante zur Erhöhung der Stabilität ist es, die Grenzfläche 3 in einem an die Oberfläche 1' des Kiefermodells 1 angrenzenden Bereich manuell und/oder automatisch noch etwas weiter in vestibuläre Richtung zu verschieben, so dass das zu erzeugende Rückenschutzplattenmodell 4 in einem an das digitale Modell 1 des Kiefers angrenzenden Bereich verstärkt ist (Fig. 4). Wird das zu erzeugende Modell 6 eines Zahnersatzteils mit einem überlappenden Element 9 ausgeführt, so ist es besonders vorteilhaft, wenn eine solche Verstärkung mit dem überlappenden Element 9 derart abschließt, dass das Rückenschutzplattenmodell 4 zumindest in einem Bereich des überlappenden Elements 9 sowie in einem zwischen dem überlappenden Element 9 und der Oberfläche 1' des Kiefermodells 1 liegenden Bereich eine gegenüber der vorgegebenen Tiefe T verstärkte Tiefe T' aufweist.

Zur Erhöhung der Stabilität trägt weiterhin das Abrunden von Ecken bei, so dass diese beispielsweise als Hohlkehlen ausgebildet sind. Hierfür wird manuell und/oder automatisch eine Abrundung von Ecken der Grenzfläche 3 vorgenommen, wie es beispielhaft in Fig. 4 im Profil der Grenzfläche 3 oberhalb des überlappenden Elements 9 zu erkennen ist. Insbesondere bei einer Ausführung des Zahnersatzteils mit einem überlappenden Element 9, z.B. einer Retentionsplatte, ist das Abrunden der angrenzenden Ecke der Grenzfläche 3 vorteilhaft, da gerade Übergänge verschiedener Materialien möglichst als Hohlkehle oder Uhrglasfassung gestaltet werden sollten.

Eine weitere Möglichkeit, die Stabilität des zu erzeugenden Zahnersatzteils zu erhöhen, ist das Vorsehen mindestens eines Verbindungselements 10. Eine beispielhafte Ausführungsform eines solchen Verbindungselements 10 ist ebenfalls in Fig. 4 zu erkennen. Das Verbindungselement 10 besteht aus einer Ausnehmung auf Seiten des Rückenschutzplattenmodells 4 und einer Auskragung auf Seiten des überarbeiteten Zahnprothesenmodells, wobei Ausnehmung sowie Auskragung, nach Art einer Uhrglasfassung, hinsichtlich der Grenzfläche 3 schräg in eine inzisale bzw. okklusale Richtung verlaufen.

Nach einer abschließenden Festlegung der Grenzfläche 3 werden, wie bereits beschrieben, das Rückenschutzplattenmodell 4 und das überarbeitete Zahnprothesenmodell 5 anhand dieser Grenzfläche 3, dem digitalen Kiefermodell 1 und/oder dem Zahnprothesenmodell 2 und gegebenenfalls dem überlappenden Element 9 erzeugt und zu einem Zahnersatzteilmodell 6 zusammengefügt und/oder ergänzt, wie es in Fig. 5 schraffiert skizziert ist. Das Rückenschutzplattenmodell 4 kann beispielsweise mit bekannten Verfahrensschritten zu einem Zahnprothesenbasismodell für eine Zahnprothesenbasis mit Haltevorrichtungen zur Befestigung der Zahnprothese an benachbarten Zähnen ergänzt werden.

Das erzeugte Zahnersatzteilmodell 6 kann weiterhin zur Herstellung eines Zahnersatzteils, welches aus einer Zahnprothesenbasis mit Rückenschutzplatte und einer Zahnprothese besteht, verwendet werden. Hierfür können Zahnprothese und Zahnprothesenbasis gemäß den entsprechenden Modelldaten beispielsweise durch Gussverfahren oder Fräsverfahren aus den entsprechenden, üblichen Materialien, wie z.B. Keramik bzw. Metall, erzeugt werden.

Ist eine Zahnprothese bereits vorhanden und wurde beispielsweise dem Zahnprothesenmodell 2 zugrunde gelegt, so ist es besonders vorteilhaft, anhand des überarbeiteten Zahnprothesenmodells 4 eine Schablone 11 anzufertigen, mit deren Hilfe die Zahnprothese an das überarbeitete Zahnprothesenmodell 5 angepasst werden kann. Die Schablone 11 kann, wie in Fig. 6 dargestellt, vorteilhafterweise mehrteilig ausgeführt werden. Die einzelnen Teile der Schablone 11 können vorteilhafterweise mittels eindeutig ineinander greifender Schlüssel verbunden werden, um Fehler durch ein falsches Zusammensetzen zu vermeiden.

Die Schablone 11 weist eine Ausnehmung 12 auf, deren Form einer Negativform des überarbeiteten Zahnprothesenmodells 5 entspricht, wobei ein Rand 13 der Ausnehmung 12 genau einem Rand der Grenzfläche 3 entspricht. Hierdurch kann die bereits vorhandene Zahnprothese (hier gestrichelt dargestellt) in die Ausnehmung eingelegt und der überstehende Bereich, beispielsweise durch Schleifen, entfernt werden.

### Bezugszeichenliste

- 1: digitales Modell eines zu versorgenden Kiefers
- 1': Oberfläche des digitalen Kiefermodells 1
- 2: digitales Zahnprothesenmodell
- 2': Oberfläche des Zahnprothesenmodells 2
- 3: Grenzfläche
- 4: Rückenschutzplattenmodell
- 5: überarbeitetes Zahnprothesenmodell
- 6: Zahnersatzteilmodell
- 7: orale Oberfläche des Zahnprothesenmodells 2
- 8: Ausgangsfläche
- 9: überlappendes Element
- 10: Verbindungselement
- 11: Schablone
- 12: Ausnehmung
- 13: Rand
- T: Tiefe
- T': Tiefe

## Patentansprüche

1. Verfahren zur Erstellung eines digitalen Modells (6) eines Zahnersatzteils, das aus einer Zahnprothese und einer eine Rückenschutzplatte umfassenden Prothesenbasis besteht, **dadurch gekennzeichnet,**
- **dass** in einem digitalen Modell (1) eines zu versorgenden Kiefers oder Kieferabschnitts und eines darin positionierten digitalen Zahnprothesenmodells (2) im Bereich des Zahnprothesenmodells (2) eine Grenzfläche (3) automatisch und/oder manuell eingezeichnet wird,
- **dass** ein Rückenschutzplattenmodell (4) aus der Grenzfläche (3), einer angrenzenden Oberfläche (1') des digitalen Kiefermodells (1) und einem die Oberfläche (1') und die Grenzfläche (3) verbindenden Bereich einer Oberfläche (2') des Zahnprothesenmodells (2) gebildet wird,
- **dass** ein überarbeitetes Zahnprothesenmodell (5) aus dem digitalen Zahnprothesenmodell (2) durch Übernahme der Grenzfläche (3) als Oberfläche gebildet wird und
- **dass** aus dem Rückenschutzplattenmodell (4) und dem überarbeiteten Zahnprothesenmodell (5) das digitale Modell (6) des Zahnersatzteils erzeugt wird.

2. Verfahren nach Anspruch 1, **dadurch gekennzeichnet, dass** die Grenzfläche (3) durch eine Verschiebung einer auf einer oralen Oberfläche (7) des Zahnprothesenmodells (2) und/oder des digitalen Kiefermodells (1) automatisch und/oder manuell markierten Ausgangsfläche (8) um eine vorgegebene Tiefe (T) in eine im Wesentlichen vestibuläre Richtung erzeugt wird.

3. Verfahren nach Anspruch 2, **dadurch gekennzeichnet, dass** die Ausgangsfläche (8) durch einzeichnen einer Umfangslinie markiert wird.

4. Verfahren nach Anspruch 2 oder 3, **dadurch gekennzeichnet, dass** die Verschiebung der Ausgangsfläche (8) entlang einer eine Einschubrichtung für das Zahnersatzteil berücksichtigenden Richtung erfolgt.

5. Verfahren nach einem der Ansprüche 1 bis 4, **dadurch gekennzeichnet, dass** die Grenzfläche (3) nach dem Einzeichnen manuell und/oder automatisch verändert wird.

6. Verfahren nach einem der Ansprüche 1 bis 5, **dadurch gekennzeichnet, dass** die Grenzfläche (3) in einem an die Oberfläche (1') des digitalen Modells (1) des Kiefers angrenzenden Bereich automatisch und/oder manuell weiter in vestibuläre Richtung verschoben wird, so dass das Rückenschutzplattenmodell 4 in einem an das digitale Modell 1 des Kiefers angrenzenden Bereich verstärkt ist.

7. Verfahren nach einem der Ansprüche 1 bis 6, **dadurch gekennzeichnet, dass** ein die Grenzfläche (3) überlappendes Element (9) automatisch oder manuell eingezeichnet wird.

8. Verfahren nach Anspruch 7, **dadurch gekennzeichnet, dass** das überlappende Element (9) in das Rückschutzplattenmodell (4) und/oder das überarbeitete Zahnprothesenmodell (5) integriert wird.

9. Verfahren nach einem der Ansprüche 1 bis 8, **dadurch gekennzeichnet, dass** eine oder mehrere Ecken der Grenzfläche (3) automatisch abgerundet werden.

10. Verfahren nach einem der Ansprüche 1 bis 9, **dadurch gekennzeichnet, dass** eine Ausnehmung oder Auskragung als Verbindungselement (10) manuell und/oder automatisch in die Grenzfläche (3) integriert wird.

11. Verfahren zur Herstellung eines Zahnersatzteils, das aus einer Zahnprothese und einer eine Rückenschutzplatte umfassenden Prothesenbasis besteht, **dadurch gekennzeichnet, dass** das Zahnersatzteil anhand eines gemäß einem der Ansprüche 1 bis 10 erzeugten digitalen Modells (6) des Zahnersatzteils hergestellt wird.

12. Verfahren zur Herstellung eines Zahnersatzteils nach Anspruch 11, **dadurch gekennzeichnet, dass** anhand des überarbeiteten Zahnprothesenmodells (5) eine Schablone (11) hergestellt wird, die eine Vertiefung aufweist, deren Form einer Negativform einer bis zur Grenzfläche (3) reichenden verstibulären Oberfläche des überarbeiteten Zahnprothesenmodells (5) entspricht.

13. Verfahren zur Herstellung eines Zahnersatzteils nach Anspruch 12, **dadurch gekennzeichnet, dass** die Schablone (11) mehrteilig ausgebildet ist.

## Claims

1. A method for generating a digital model (6) of a dental replacement part, formed by a dental prosthesis and a prosthesis base having a rear protection plate, **characterised in that**
- in a digital model (1) of a jawbone or jawbone section to be provided and a digital dental prosthesis model (2) positioned therein, an interface (3) is automatically and/or manually marked in the region of the dental prosthesis model (2),
- a rear protection plate model (4) is formed by the interface (3), an abutting surface (1') of the digital jawbone model (1) and a region of a surface (2') of the dental prosthesis model (2) joining the surface (1') and the interface (3),
- a revised dental prosthesis model (5) is formed from the digital dental prosthesis model (2) by adopting the interface (3) as a surface, and
- the digital model (6) of the dental replacement part is generated from the rear protection plate model (4) and the revised dental prosthesis model (5).

2. The method according to claim 1, **characterised in that** the interface (3) automatically and/or manually marked by a displacement of a starting surface (8) on an oral surface (7) of the dental prosthesis model (2) and/or the digital jawbone model (1) is generated to a predetermined depth (T) in a substantially vestibular direction.

3. The method according to claim 2, **characterised in that** the starting surface (8) is marked by drawing a circumferential line.

4. The method according to claim 2 or 3, **characterised in that** the displacement of the starting surface (8) takes place along a direction which takes into account an insertion direction for the dental replacement part.

5. The method according to any one of claims 1 through 4, **characterised in that** the interface (3) is changed manually and/or automatically after the drawing.

6. The method according to any one of claims 1 through 5, **characterised in that** the interface (3) in a region abutting the surface (1') of the digital jawbone model (1) is automatically and/or manually displaced further in the vestibular direction, so that the rear protection plate model 4 is reinforced in a region abutting the digital jawbone model 1.

7. The method according to any one of claims 1 through 6, **characterised in that** an element (9) overlapping the interface (3) is drawn automatically or manually.

8. The method according to claim 7, **characterised in that** the overlapping element (9) is integrated into the rear protection plate model (4) and/or the revised dental prosthesis model (5).

9. The method according to any one of claims 1 through 8, **characterised in that** one or a plurality of corners of the interface (3) are automatically rounded.

10. The method according to any one of claims 1 through 9, **characterised in that** a recess or overhang is manually and/or automatically integrated into the interface (3) as a connecting element (10).

11. A method for producing a dental replacement part having a dental prosthesis and a prosthetic base comprising a rear protection plate, **characterised in that** the dental replacement part is produced using a digital model (6) of the dental replacement part generated according to any one of claims 1 through 10.

12. The method for producing a dental replacement part according to claim 11, **characterised in that** a template (11) is produced on the basis of the revised dental prosthesis model (5), which template has an indentation, the shape of which corresponds to a negative form of a vestibular surface extending to the interface (3) of the revised dental prosthesis model (5).

13. The method for producing a dental replacement part according to claim 12, **characterised in that** the template (11) is designed to have several parts.

## Revendications

1. Procédé de création d'un modèle numérique (6) d'un élément prothétique dentaire, qui consiste en une prothèse dentaire et en une base de prothèse comprenant une plaque de protection arrière, **caractérisé en ce que**
- une interface (3) est tracée automatiquement et/ou manuellement dans un modèle numérique (1) d'une mâchoire ou d'une section de mâchoire à traiter et d'un modèle numérique de prothèse dentaire (2) positionné à l'intérieur, dans la zone du modèle de prothèse dentaire (2),
- un modèle de plaque de protection arrière (4) est formé à partir de l'interface (3), d'une surface adjacente (1') du modèle de mâchoire numérique (1) et d'une zone d'une surface (2') du modèle de prothèse dentaire (2) reliant la surface (1') et l'interface (3),
- un modèle de prothèse dentaire retravaillé (5) est formé à partir du modèle de prothèse dentaire numérique (2) en adoptant l'interface (3) comme surface et
- le modèle numérique (6) d'élément prothétique dentaire est généré à partir du modèle de plaque de protection arrière (4) et du modèle de prothèse dentaire retravaillé (5).

2. Procédé selon la revendication 1, **caractérisé en ce que** l'interface (3) est générée par un déplacement d'une surface de départ (8) marquée automatiquement et/ou manuellement sur une surface orale (7) du modèle de prothèse dentaire (2) et/ou du modèle de mâchoire numérique (1), sur une profondeur (T) prédéterminée dans une direction sensiblement vestibulaire.

3. Procédé selon la revendication 2, **caractérisé en ce que** la surface de départ (8) est marquée en traçant une ligne circonférentielle.

4. Procédé selon la revendication 2 ou 3, **caractérisé en ce que** le déplacement de la surface de départ (8) se produit le long d'une direction prenant en compte une direction d'insertion pour l'élément prothétique dentaire.

5. Procédé selon l'une des revendications 1 à 4, **caractérisé en ce que** l'interface (3) est modifiée manuellement et/ou automatiquement après le traçage.

6. Procédé selon l'une des revendications 1 à 5, **caractérisé en ce que** l'interface (3) est déplacée automatiquement et/ou manuellement plus loin dans la direction vestibulaire, dans une zone adjacente à la surface (1') du modèle numérique (1) de la mâchoire, de telle sorte que le modèle de plaque de protection arrière 4 soit renforcé dans une zone adjacente au modèle numérique (1) de la mâchoire.

7. Procédé selon l'une des revendications 1 à 6, **caractérisé en ce qu'**un élément (9) chevauchant l'interface (3) est tracé automatiquement ou manuellement.

8. Procédé selon la revendication 7, **caractérisé en ce que** l'élément chevauchant (9) est intégré dans le modèle de plaque de protection arrière (4) et/ou le modèle de prothèse dentaire retravaillé (5).

9. Procédé selon l'une des revendications 1 à 8, **caractérisé en ce qu'**un ou plusieurs coins de l'interface (3) sont arrondis automatiquement.

10. Procédé selon l'une des revendications 1 à 9, **caractérisé en ce qu'**une cavité ou saillie est intégrée manuellement et/ou automatiquement dans l'interface (3) en tant qu'élément de liaison (10).

11. Procédé de fabrication d'un élément prothétique dentaire composé d'une prothèse dentaire et d'une base de prothèse comprenant une plaque de protection arrière, **caractérisé en ce que** l'élément prothétique dentaire est réalisé sur la base d'un modèle numérique (6) de l'élément prothétique dentaire généré selon l'une des revendications 1 à 10.

12. Procédé de fabrication d'un élément prothétique dentaire selon la revendication 11, **caractérisé en ce qu'**un gabarit (11) est fabriqué sur la base du modèle de prothèse dentaire retravaillé (5), qui présente un creux dont la forme correspond à une forme négative d'une surface vestibulaire du modèle de prothèse dentaire retravaillé (5), qui s'étend jusqu'à l'interface (3).

13. Procédé de fabrication d'élément prothétique dentaire selon la revendication 12, **caractérisé en ce que** le gabarit (11) est construit en plusieurs parties.
